# EUROPÄISCHE PATENTSCHRIFT

(11) **EP 1 712 433 B1**
(45) Veröffentlichungstag und Bekanntmachung des Hinweises auf die Patenterteilung: **15.07.2009**
(21) Anmeldenummer: 06007563.7
(22) Anmeldetag: 11.04.2006
(51) Int. Cl.: B60R 21/34

(54) **Einrichtung zur Abstützung einer Fronthaube an einem Karrosserieteil eines Kraftfahrzeuges**
Device for supporting a bonnet on a motor vehicle body part
Dispositif d'appui d'un capot de véhicule automobile sur un élément de carrosserie

(30) Priorität: 13.04.2005 DE 102005016922
(43) Veröffentlichungstag der Anmeldung: 18.10.2006
(73) Patentinhaber: GM Global Technology Operations, Inc., Detroit, MI 48265-3000 (US)
(72) Erfinder: Hirsch, Stefan, 64331 Weiterstadt (DE); Mildner, Udo, 65550 Limburg (DE)
(74) Vertreter: Strauss, Peter

(56) Entgegenhaltungen:
- EP-A- 1 683 691
- EP-A2- 0 738 838
- WO-A-20/04083020
- DE-A1- 19 544 064
- DE-A1- 19 814 995
- DE-U1- 9 211 550
- FR-A1- 2 565 649
- FR-A1- 2 874 876

## Beschreibung

Die Erfindung betrifft eine Einrichtung zur Abstützung einer Fronthaube an einem Karosserieteil eines Kraftfahrzeuges mit einem an der Fronthaube oder dem Karosserieteil zu befestigenden Halter, mit einem zur Abstützung des jeweils gegenüberliegenden Bauteils vorgesehenen Puffer, wobei zwischen dem Puffer und dem Halter eine Führungseinrichtung zur Führung der Bewegung des Puffers von einer hervorstehenden Position in eine zurückgezogene Position und ein Dämpfungsglied zur Dämpfung der Bewegung des Puffers von der hervorstehenden Position in die zurückgezogene Position angeordnet ist.

Solche Einrichtungen werden bei heutigen Kraftfahrzeugen zur Abstützung der Fronthaube in ihrer vorgesehenen Lage eingesetzt und sind aus der FR -A1- 2 565 649 bekannt. Bei dieser Einrichtung ist der Halter mit dem Karosserieteil verrastet und mittels eines Federelementes in Richtung Haube vorgespannt und ermöglicht ein Absenken der Haube, beispielsweise bei einem Aufprall eines Fußgängers. Nachteilig bei der bekannten Einrichtung ist jedoch, dass die vorgesehene Kraft, bei der der Halter kollabiert, nicht zuverlässig einstellbar ist. Eine zu hohe Festigkeit der Einrichtung führt jedoch zu einem geringen Schutz des Fußgängers beim Aufprall, während eine zu geringe Festigkeit im ungünstigsten Fall zu einem Nachgeben des Puffers bei durch den Betrieb des Kraftfahrzeuges hervorgerufenen Belastungen des Puffers.

Aus der DE -A1- 198 14 995 ist ein elastischer Anschlagpuffer bekannt geworden, bei dem zwischen einem Pufferkopf und einem Pufferschaft ein Hohlraum erzeugt ist. Die Dämpfung des Anschlagpuffers ist abhängig von der Elastizität der Bauteile.

Weiterhin ist aus der EP 1 350 693 A1 eine Fronthaube bekannt geworden, bei der ein Stellglied für eine zum Fußgängerschutz aufstellbare Fronthaube einen Aktuator zu seiner Verstellung hat. Der Aktuator kann einen Elektromotor aufweisen. Eine solche Verstellung der Fronthaube erfordert jedoch einen beträchtlichen baulichen Aufwand.

Der Erfindung liegt das Problem zugrunde, eine Einrichtung der eingangs genannten Art so weiterzubilden, dass sie eine besonders genaue Einstellbarkeit der Kraft, bei der der Puffer nachgibt, ermöglicht.

Dieses Problem wird erfindungsgemäß dadurch gelöst, dass das Dämpfungsglied zumindest einen Druckspeicher für ein Medium aufweist und dass der Druckspeicher mit einer Drossel mit der Umgebung verbunden ist, dass mehrere Druckspeicher in Bewegungsrichtung des Puffers hintereinander angeordnet sind und dass die Drossel des einen Druckspeichers in den nächsten Druckspeicher mündet.

Durch diese Gestaltung gibt der Puffer bei einem Aufprall eines Fußgängers auf die Fronthaube nach und wird dabei von der Führungseinrichtung in einer vorgesehenen Bewegungsbahn geführt. Diese Bewegung wird von dem Dämpfungsglied gedämpft. Durch eine entsprechende Auslegung des Dämpfungsgliedes lässt sich die Kraft, bei der der Puffer nachgibt, besonders einfach einstellen. Das Dämpfungsglied ermöglicht gemäß einer vorteilhaften Weiterbildung der Erfindung einen gleichmäßigen Kraftverlauf beim Niederdrücken der Fronthaube, weil das Dämpfungsglied zumindest einen Druckspeicher für ein Medium aufweist und weil der Druckspeicher mit einer Drossel mit der Umgebung verbunden ist. Ein weiterer Vorteil dieser Gestaltung besteht darin, dass das Dämpfungsglied hierdurch ein besonders niedriges Gewicht hat. Vorzugsweise ist das Medium Luft. Ein vorgesehener Kraftverlauf über den Weg des Puffers lässt sich gemäß einer anderen vorteilhaften Weiterbildung der Erfindung einfach einstellen, weil mehrere Druckspeicher in Bewegungsrichtung des Puffers hintereinander angeordnet sind. Bei mehreren Druckspeichern stellen die Drosseln jeweils eine Verbindung mit der Umgebung her.

Das Dämpfungsglied gestaltet sich gemäß einer anderen vorteilhaften Weiterbildung der Erfindung konstruktiv besonders einfach, wenn die Drossel als Bohrung in einer Wandung des Druckspeichers mit einem vorgesehenen Durchmesser ausgebildet ist.

Die Führungseinrichtung gestaltet sich gemäß einer anderen vorteilhaften Weiterbildung der Erfindung konstruktiv besonders einfach, wenn die Führungseinrichtung teleskopartig ineinander schiebbare Führungsteile aufweist. Weiterhin ist die erfindungsgemäße Einrichtung in der zurückgezogenen Position des Puffers besonders kompakt und eignet sich hierdurch für den Einsatz in heutigen Kraftfahrzeugen mit einem besonders eng begrenzten Raum unter der Fronthaube.

Der Druckspeicher des Dämpfungsgliedes könnte beispielsweise ein gummielastischer Ball sein, welcher bei der Bewegung des Puffers zusammengedrückt wird. Die erfindungsgemäße Einrichtung erfordert jedoch eine besonders geringe Anzahl an Bauteilen, wenn die Führungsteile eine Wandung des Druckspeichers des Dämpfungsgliedes bilden und die Drossel aufweisen.

Die Abstimmung der verschiedenen Druckspeicher des Dämpfungsgliedes auf den vorgesehenen Kraftverlauf gestaltet sich jedoch gemäß einer anderen vorteilhaften Weiterbildung der Erfindung besonders einfach, wenn die Drossel des einen Druckspeichers in den nächsten Druckspeicher mündet.

Im Normalbetrieb des Kraftfahrzeuges soll die Einrichtung Betriebskräfte der Fronthaube abstützen. Solche Betriebskräfte lassen sich gemäß einer anderen vorteilhaften Weiterbildung der Erfindung einfach abstützen, wenn die Führungsteile über zumindest ein Scherelement untereinander verbunden sind. Solche Scherelemente lassen sich durch eine entsprechende Wahl ihres Materials, ihrer Anzahl und ihres Querschnitts einfach auf eine vorgesehene Belastung einstellen, bei der sie abscheren und die Bewegung des Puffers freigeben. Damit wird der Puffer in der hervorstehenden Position unterhalb der vorgesehenen Belastung zuverlässig gehalten und vermag die Betriebskräfte der Fronthaube abzustützen. Oberhalb der vorgesehenen Belastung wird das Scherelement zerstört und die Bewegung des Puffers durch das Dämpfungsglied gedämpft, um ein Nachgeben der Fronthaube bei einem Aufprall eines Fußgängers zu ermöglichen. Vorzugsweise sind die Scherelemente als Scherstifte ausgebildet.

Zur Vereinfachung der Montage der erfindungsgemäßen Einrichtung zu einer vormontierbaren baulichen Einheit trägt es bei, wenn die teleskopartig ineinander schiebbaren Führungsteile Auflagevorsprünge für das nächste Führungsteil mit einer im Vergleich zu den Schwerelementen geringen Festigkeit aufweisen. Hierdurch lässt sich die Position, in der das Scherelement montiert werden kann, besonders leicht finden. Durch ihre geringe Festigkeit tragen die Auflagevorsprünge nicht zu einer bedeutenden Dämpfung der Bewegung des Puffers bei.

Die Höhe des Puffers in der hervorstehenden Position und damit auch die Lage der Fronthaube lässt sich gemäß einer anderen vorteilhaften Weiterbildung der Erfindung einfach einstellen, wenn ein zur Abstützung der Fronthaube vorgesehenes Pufferelement über ein Gewinde mit einem der Führungsteile verbunden ist. Zur Vermeidung eines selbständigen Verdrehens des Puffers kann das Gewinde selbstverständlich mittels eines handelsüblichen Schraubensicherungsmittels verklebt sein.

Eine Einleitung von Vibrationen in die Scherelemente lässt sich gemäß einer anderen vorteilhaften Weiterbildung der Erfindung einfach vermeiden, wenn das Pufferelement zumindest an seiner dem einen Führungsteil abgewandten Seite aus einem gummielastischen Material gefertigt ist.

Zur Verringerung des Montageaufwandes der erfindungsgemäßen Einrichtung trägt es bei, wenn der Halter einen Flansch zur Auflage auf dem Karosserieteil hat.

Eine Korrosion an aneinandergrenzenden Bereichen des Halters und des Karosserieteils lässt sich gemäß einer anderen vorteilhaften Weiterbildung der Erfindung einfach vermeiden, wenn der Halter zumindest an seiner dem Karosserieteil gegenüberstehenden Seite aus Kunststoff gefertigt ist. Weiterhin schützt der Kunststoff das Karosserieteil vor einer Beschädigung durch den Rand des Halters.

Die Erfindung lässt verschiedene Ausführungsformen zu. Zür weiteren Verdeutlichung ihres Grundprinzips ist eine davon in der Zeichnung dargestellt und wird nachfolgend beschrieben. Die Zeichnung zeigt in
- Fig. 1: perspektivisch ein Kraftfahrzeug mit mehreren Puffern einer erfindungsgemäßen Einrichtung,
- Fig. 2: stark vergrößert einen Teilschnitt durch die erfindungsgemäße Einrichtung aus Figur 1 entlang der Linie II - II,
- Fig. 3: einen gegenüber dem in Figur 2 dargestellten Teilschnitt versetzten Schnitt durch die erfindungsgemäße Einrichtung aus Figur 1.

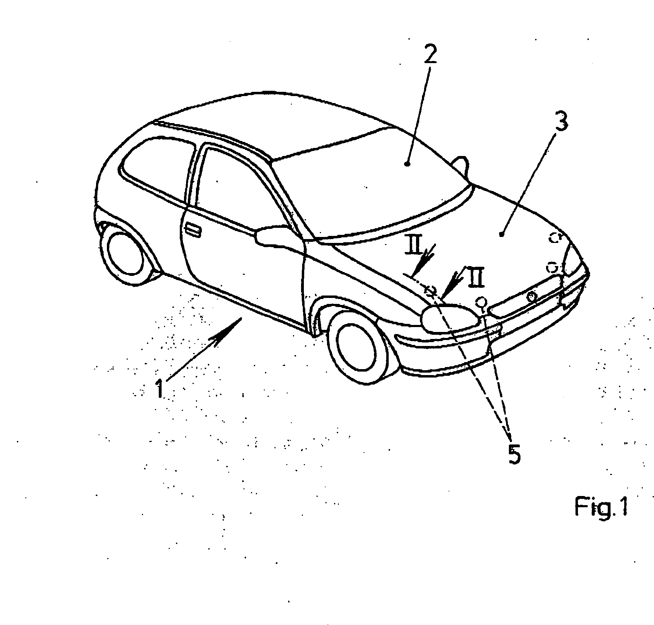

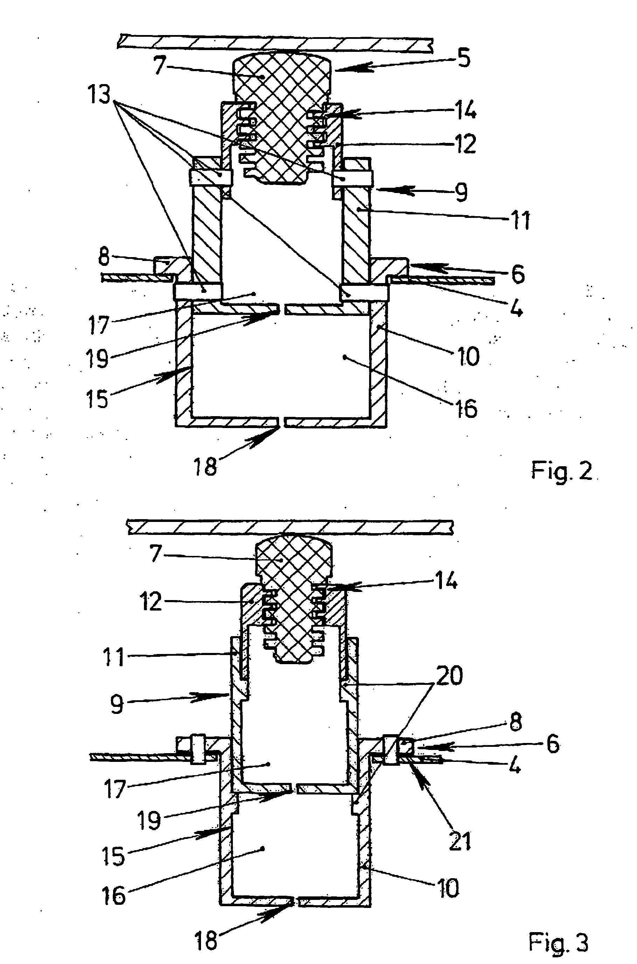

Figur 1 zeigt ein Kraftfahrzeug mit einer Kraftfahrzeugkarosserie 1 und mit einer in Fahrtrichtung gesehen vor einer Frontscheibe 2 angeordneten Fronthaube 3. Die Fronthaube 3 ist schwenkbar an der Kraftfahrzeugkarosserie 1 angelenkt. Das Kraftfahrzeug hat zudem eine Einrichtung zur Abstützung der Fronthaube 3 an einem in Figur 2 dargestellten Karosserieteil 4 der Kraftfahrzeugkarosserie 1 mit mehreren Puffern 5.

Figur 2 zeigt stark vergrößert in einer Schnittdarstellung durch einen Teilbereich des Kraftfahrzeuges aus Figur 1 entlang der Linie II - II, dass an dem Karosserieteil 4 ein Halter 6 zur Halterung des Puffers 5 befestigt ist. Ein aus einem gummielastischen Material gefertigtes Pufferelement 7 des Puffers 5 stützt die Fronthaube 3 ab. Ein Flansch 8 des Halters 6 liegt auf dem Karosserieteil 4 auf und ist, wie in Figur 3 in einem versetzten Schnitt dargestellt, mit dem Karosserieteil 4 vernietet. Der Halter 6 ist über eine Führungseinrichtung 9 mit dem Puffer 5 verbunden. Mehrere Führungsteile 10, 11, 12 des Puffers, 5 sind teleskopartig ineinander schiebbar gehalten und über Scherelemente 13 miteinander verbunden. In eines der Führungsteile 12 ist das Pufferelement 7 über ein Gewinde 14 eingedreht. Damit lässt sich durch ein Verdrehen des Pufferelementes 7 die Höhe des Puffers 5 einstellen. Weiterhin hat der Puffer 5 ein Dämpfungsglied 15 mit mehreren; übereinander angeordneten. Druckspeichern 16, 17 für Luft. Der.dem Puffer 6 am weitesten entfernt angeordnete, erste Druckspeicher 16 ist über eine als Öffnung ausgebildete Drossel 18 mit der Umgebung verbunden. Eine als Öffnung ausgebildete Drossel 19 des dem Puffer 5 am nächsten angeordneten, zweiten Druckspeichers 17 mündet in den ersten Druckspeicher 16. Die Führungsteile 10 - 12 begrenzen die wandung der Druckspeicher 16, 17 und weisen die Drosseln 18, 19 auf.

Figur 3 zeigt in einem versetzten Schnitt durch die bauliche Einheit aus Puffer 5 und Halter 6, dass in den Führungsteilen 10 - 12 Auflagevorsprünge 20 angeordnet sind. Diese Auflagevorsprünge 20 weisen nur eine sehr geringe Festigkeit auf und dienen vor allem der Erleichterung der Montage bei der Verbindung der Führungsteile 10 - 12 mit den in Figur 2 dargestellten Scherelementen 13. Damit lässt sich der Halter 6 mit dem Puffer 5, der Führungseinrichtung 9 und dem Dämpfungsglied 15 außerhalb des Kraftfahrzeuges zu einer Einheit vormontieren und durch Vernietung an dem Karosserieteil 4 befestigen. Anschließend wird die Höhe des Puffers 5 durch Verdrehen des Pufferelementes 7 eingestellt. Der Flansch 8 des Halters 6 weist an seiner dem Karosserieteil 4 zugewandten Seite eine Schicht 21 aus Kunststoff auf. Dies verhindert eine Beschädigung des in der Regel bereits lackierten Karosserieteils 4 bei der Montage des Halters 6 an dem Kraftfahrzeug.

Im Normalbetrieb des Kraftfahrzeuges weisen die Scherelemente 13 eine ausreichende Festigkeit auf, um die Fronthaube 3 in ihrer Lage zu halten. Bei einem Aufprall eines Fußgängers auf die Fronthaube 3 werden die Scherelemente 13 zerstört und der Puffer 5 von seiner in den Figuren 2 und 3 dargestellten, hervorstehenden Position in eine in den Halter 6 eingedrückte, zurückgezogene Position bewegt. Die Niederbewegung des Puffers 5 durch den Aufprall des Fußgängers wird durch das Dämpfungsglied 15 gedämpft. Die dargestellte Anordnung der Druckspeicher 16, 17 ermöglicht eine weitgehend freie Einstellung des Kraftverlaufs beim Niederdrücken der Fronthaube 3. **Bezugszeichenliste**
- 1: Kraftfahrzeugkarosserie
- 2: Frontscheibe
- 3: Fronthaube
- 4: Karosserieteil
- 5: Puffer

- 6: Halter
- 7.: Pufferelement
- 8: Flansch
- 9: Führungseinrichtung
- 10-12: Führungsteil

- 13: Scherelement
- 14: Gewinde
- 15.: Dämpfungsglied
- 16, 17: Druckspeicher
- 18, 19: Drossel

- 20: Auflagevorsprung
- 21: Schicht

## Patentansprüche

1. Einrichtung zur Abstützung einer Fronthaube (3) an einem Karosserieteil (4) eines Kraftfahrzeuges mit einem an der Fronthaube (3) oder dem Karosserieteil (4) zu befestigenden Halter (6), mit einem zur Abstützung des jeweils gegenüberliegenden Bauteils vorgesehenen Puffer (5), wobei zwischen dem Puffer (5) und dem Halter (6) eine Führungseinrichtung (9) zur Führung der Bewegung des Puffers (5) von einer hervorstehenden Position in eine zurückgezogene Position und ein Dämpfungsglied (15) zur Dämpfung der Bewegung des Puffers (5) von der hervorstehenden Position in die zurückgezogene Position angeordnet ist, **dadurch gekennzeichnet, dass** das Dämpfungsglied (15) einen Druckspeicher (16, 17) für ein Medium aufweist und dass der Druckspeicher (16, 17) mit einer Drossel (18, 19) mit der Umgebung verbunden ist, dass mehrere Druckspeicher (16, 17) in Bewegungsrichtung des Puffers (5) hintereinander angeordnet sind und dass die Drossel (19) des einen Druckspeichers (17) in den nächsten Druckspeicher (16) mündet.

2. Einrichtung nach Anspruch 1, **dadurch gekennzeichnet, dass** die Drossel (18, 19) als Bohrung in einer Wandung des Druckspeichers (16, 17) mit einem vorgesehenen Durchmesser ausgebildet ist.

3. Einrichtung nach Anspruch 1 oder 2, **dadurch gekennzeichnet, dass** die Führungseinrichtung (9) teleskopartig ineinander schiebbare Führungsteile (10 - 12) aufweist.

4. Einrichtung nach Anspruch 3, **dadurch gekennzeichnet, dass** die Führungsteile (10 - 12) eine Wandung des Druckspeichers (16, 17) des Dämpfungsgliedes (15) bilden und die Drossel (18, 19) aufweisen.

5. Einrichtung nach Anspruch 3 oder 4, **dadurch gekennzeichnet, dass** die Führungsteile (10 - 12) über zumindest ein Scherelement (13) untereinander verbunden sind.

6. Einrichtung nach Anspruch 5, **dadurch gekennzeichnet, dass** die teleskopartig ineinander schiebbaren Führungsteile (10 - 12) Auflagevorsprünge (20) für das nächste Führungsteil (10 - 12) mit einer im Vergleich zu den Scherelementen (13) geringen Festigkeit aufweisen.

7. Einrichtung nach zumindest einem der vorhergehenden Ansprüche, **dadurch gekennzeichnet, dass** ein zur Abstützung der Fronthaube (3) vorgesehenes Pufferelement (7) über ein Gewinde (14) mit einem der Führungsteile (12) verbunden ist.

8. Einrichtung nach zumindest einem der vorhergehenden Ansprüche, **dadurch gekennzeichnet, dass** das Pufferelement (7) zumindest an seiner dem einen Führungsteil (12) abgewandten Seite aus einem gummielastischen Material gefertigt ist.

9. Einrichtung nach zumindest einem der vorhergehenden Ansprüche, **dadurch gekennzeichnet, dass** der Halter (5) einen Flansch (8) zur Auflage auf dem Karosserieteil (4) hat.

10. Einrichtung nach zumindest einem der vorhergehenden Ansprüche, **dadurch gekennzeichnet, dass** der Halter (5) zumindest an seiner dem Karosserieteil (4) gegenüberstehenden Seite aus Kunststoff gefertigt ist.

## Claims

1. Device for supporting a bonnet (3) on a motor vehicle body part (4) with a holder (6) to be attached at the bonnet (3) or the body part (4), provided with a buffer (5) which is to support the directly opposed component, whereby, between the buffer (5) and the holder (6), a guiding device (9) is located for guiding the buffer (5) movements from a protruding position into a retreated position and an attenuator (15) for attenuating the buffer (5) moving from the protruding position into the retreated position, **characterised in that** the attenuator (15) is provided with a pressure accumulator (16, 17) for a medium and that the pressure accumulator (16, 17) is connected to the environment through a throttle (18, 19), that several pressure accumulators (16, 17) are arranged in succession in moving direction of the buffer (5) and that the throttle (19) of one pressure accumulator (17) opens out into the next pressure accumulator (16).

2. Device according to claim 1, **characterised in that** the throttle (18, 19) is designed as borehole in a wall of the pressure accumulator (16, 17) with a specified diameter.

3. Device according to claim 1 or 2, **characterised in that** the guiding device (9) is provided with telescopic guide components (10 - 12).

4. Device according to claim 3, **characterised in that** the guide components (10 - 12) make up a wall of the attenuator's (15) pressure accumulator (16, 17) and are provided with the throttle (18, 19).

5. Device according to claim 3 or 4, **characterised in that** the guide components (10 - 12) are interconnected through at least one smear head (13).

6. Device according to claim 5, **characterised in that** the telescopic guide components (10 -12) are provided with support ears (20) for the next guide component (10 - 12) which, compared to the smear heads (13), are of a low stability.

7. Device according to at least one of the previous claims, **characterised in that** a buffer element (7) which is to support the bonnet (3) is connected through a thread (14) with one of the guide components (12).

8. Device according to at least one of the previous claims, **characterised in that** the buffer element (7) is made of an elastic rubber material at least at its far side to the one guide component (12).

9. Device according to at least one of the previous claims, **characterised in that** the holder (5) is provided with a flange (8) which allows the holder to sit on the body part (4).

10. Device according to at least one of the previous claims, **characterised in that** the holder (5) is made of plastics at least at the side facing the body part (4).

## Revendications

1. Installation pour le soutien d'un capot de front (3) sur une partie de carrosserie (4) d'un véhicule motorisé avec un support (6) à fixer sur le capot de front (3) ou sur la partie de carrosserie (4), avec un tampon (5) prévu pour le soutien de l'élément opposé respectif, où entre le tampon (5) et le support (6) est ordonné une installation de conduite (9) pour la conduite de mouvement du tampon (5) d'une position avancée à une position reculée et un membre d'amortissement (15) pour l'amortissement du mouvement du tampon (5) de la position avancée à la position reculée, **caractérisée en ce que** le membre d'amortissement (15) présente un accumulateur (16,17) pour un support et que l'accumulateur (16,17) est connecté par un réducteur (18,19) avec l'environnement, que plusieurs accumulateurs (16,17) en mouvement en direction de du tampon (5) sont ordonnés l'un après l'autre et que le réducteur (19) mène d'un accumulateur (17) au prochain accumulateur (16).

2. Installation selon la revendication 1, **caractérisée en ce que** le réducteur (18,19) est formé en tant que forage dans une paroi de l'accumulateur (16,17) avec un diamètre prévu.

3. Installation selon la revendication 1 ou 2, **caractérisée en ce que** l'installation de conduite (9) présente des éléments de conduite en forme de télescope (10 - 12) pouvant être poussés l'un dans l'autre.

4. Installation selon la revendication 3, **caractérisée en ce que** les éléments de conduite (10 - 12) forment une paroi de l'accumulateur (16,17) du membre d'amortissement (15) et présentent le réducteur (18,19).

5. Installation selon la revendication 3 ou 4, **caractérisée en ce que** les éléments de conduite (10 - 12) ou au moins un élément de cisaille (13) sont connectés entre eux.

6. Installation selon la revendication 5, **caractérisée en ce que** les éléments de conduite en forme de télescope pouvant être poussés l'un dans l'autre (10 - 12) présentent des avances d'édition (20) pour le prochain élément de conduite (10 - 12) en comparaison aux éléments de cisaille (13) une faible fermeté.

7. Installation selon au moins une des revendications précédentes, **caractérisée en ce que** un élément prévu du tampon (7) pour le soutien du capot de front est connecté avec un des éléments de conduite (12) par un filetage (14).

8. Installation selon au moins une des revendications précédentes, **caractérisée en ce que** l'élément de tampon (7) est fabriqué au moins sur le côté détourné à un de ses éléments de conduite (12) à partir d'un matériel élastique en gomme.

9. Installation selon au moins une des revendications précédentes, **caractérisée en ce que** le support (5) a une bride (8) pour poser sur la partie de carrosserie (4).

10. Installation selon au moins une des revendications précédentes, **caractérisée en ce que** le support (5) est au moins sur un côté opposé à la partie de carrosserie fait de plastique.
